(19) Europäisches Patentamt
European Patent Office
Office européen des brevets

(11) **EP 2 720 899 B1**

(12) **EUROPÄISCHE PATENTSCHRIFT**

(45) Veröffentlichungstag und Bekanntmachung des Hinweises auf die Patenterteilung:
**09.08.2017  Patentblatt 2017/32**

(21) Anmeldenummer: **12735103.9**

(22) Anmeldetag: **15.06.2012**

(51) Int Cl.:
*B60K 35/00* (2006.01)     *B60K 31/18* (2006.01)
*B60K 31/00* (2006.01)     *G01D 7/04* (2006.01)
*G01P 1/08* (2006.01)     *B60W 30/095* (2012.01)

(86) Internationale Anmeldenummer:
**PCT/EP2012/061480**

(87) Internationale Veröffentlichungsnummer:
**WO 2012/172067 (20.12.2012 Gazette 2012/51)**

(54) **VERFAHREN UND ANZEIGEEINRICHTUNG ZUM ANZEIGEN EINES FAHRZUSTANDS EINES FAHRZEUGS UND ENTSPRECHENDES COMPUTER-PROGRAMPRODUKT**

METHOD AND DISPLAY DEVICE FOR DISPLAYING A DRIVING STATE OF A VEHICLE AND CORRESPONDING COMPUTER PROGRAM PRODUCT

PROCEDE ET MOYEN D'AFFICHAGE POUR AFFICHER UN ETAT DE MARCHE D'UN VEHICULE ET PRODUIT CORRESPONDANT DE PROGRAMME POUR ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2011   DE 102011077767**
**15.06.2012   DE 102012210128**

(43) Veröffentlichungstag der Anmeldung:
**23.04.2014   Patentblatt 2014/17**

(73) Patentinhaber: **Robert Bosch GmbH**
**70442 Stuttgart (DE)**

(72) Erfinder: **SIMON, Stephan**
**31079 Sibbesse (DE)**

(56) Entgegenhaltungen:
**EP-A2- 2 143 587        DE-A1- 19 800 202**
**DE-A1- 19 847 611        DE-A1-102005 057 636**
**DE-A1-102009 048 285     US-A- 4 095 551**
**US-B2- 6 922 139**

EP 2 720 899 B1

**Beschreibung**

Stand der Technik

Die vorliegende Erfindung bezieht sich auf ein Verfahren zum Anzeigen eines Fahrzustands eines Fahrzeugs, auf eine Anzeigeeinrichtung zum Anzeigen eines Fahrzustands eines Fahrzeugs, auf eine entsprechende Vorrichtung sowie auf ein entsprechendes Computerprogrammprodukt.

Die Instrumententafel von Kraftfahrzeugen wird meist dominiert von zwei Anzeigeinstrumenten, dem Tachometer und dem Drehzahlmesser.

US 6,922,139 B2 beschreibt ein Anzeigeinstrument für ein Fahrzeug mit dem zum einen eine dem Fahrzeug zugeordnete Geschwindigkeit und zum anderen eine ein Fremdfahrzeug betreffende Geschwindigkeit angezeigt werden kann. Die gattungsgemäße US 4095 551 A befasst sich mit einer Anzeigeordnung, mit der einem Fahrer augezeigt werden kann, ob er beschleunigen oder bremsen sollte.

DE 10 2009 048285 A1 befasst sich mit einer Geschwindigkeits- und Abstandsanzeige in Kraftfahrzeugen.

EP 2 143587 A2 befasst sich mit der Anzeige eines Parameters, der einem Fahrer einen zeitlichen Abstand zu einem vorausfahrenden Fahrzeug anzeigt.

DE 198 00 202 A1 befasst sich mit einem Sicherheitsabstandsanzeigesystem für Kraftfahrzeuge.

DE 198 47 611 A1 befasst sich mit einem Verfahren zur integrierten Darstellung der Parameter eines kombinierten ADR-/GRA-Systems.

DE 10 2005 057636 A1 befasst sich mit einer Anzeigevorrichtung zur im Wesentlichen ortsfesten Darstellung eines Kraftfahrzeugs sowie eines vorausfahrenden Kraftfahrzeugs.

Offenbarung der Erfindung

Vor diesem Hintergrund wird mit der vorliegenden Erfindung ein Verfahren zum Anzeigen eines Fahrzustands eines Fahrzeugs, eine Anzeigeeinrichtung zum Anzeigen eines Fahrzustands eines Fahrzeugs, ein Verfahren zur Unterstützung eines Fahrers eines Fahrzeugs bei einer Fahraufgabe mittels einer Anzeigeeinrichtung, weiterhin eine Vorrichtung, die diese Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Mittels des erfindungsgemäßen Ansatzes kann der Fahrer eines Fahrzeugs bei der Abstandhaltung, beispielsweise zu einem voranfahrenden Fahrzeug, unterstützt werden. Dazu kann dem Fahrer ein aktueller Fahrzustand des Fahrzeugs, bei dem unter Umständen eine Kollision mit dem voranfahrenden Fahrzeug droht, in Bezug zu einem sicheren Fahrzustand des Fahrzeugs angezeigt werden, bei dem keine Kollision droht. Dadurch kann der Fahrer darin unterstützt werden, den aktuellen Fahrzustand in den sicheren Fahrzustand zu überzuführen. Die Anzeigeeinrichtung kann als ein sogenanntes Time-to-Collision-Tachometer realisiert sein, das einen Zeitpunkt bis zu einer Kollision des Fahrzeugs mit einem Fremdfahrzeug oder einem Objekt anzeigt. Die Anzeigeeinrichtung kann als ein zusätzliches Instrument einer Instrumententafel des Fahrzeugs oder anstelle des Drehzahlmessers vorgesehen sein.

Während dem Tachometer alleine schon wegen der Einhaltung der Geschwindigkeitsbeschränkungen stets Aufmerksamkeit geschenkt werden muss, ist der Drehzahlmesser-Anzeige für die meisten Fahrer nicht von Interesse. Dies gilt besonders für Fahrer von Fahrzeugen mit Automatikgetriebe oder Stufenlosgetriebe, da sie von der Aufgabe des Gangschaltens ohnehin befreit sind. Aber auch viele Fahrer von Schaltgetriebe-Fahrzeugen schalten eher nach Gehör als nach Drehzahlmesser.

Gemäß einer Ausführungsform der Erfindung wird der Drehzahlmesser durch einen Time-To-Collision-Tachometer (abgekürzt TTC-Tachometer) ersetzt. Der TTC-Tachometer kann eine angenommene Zeit bis zu einer Kollision anzeigen.

Selbstverständlich kann der TTC-Tachometer auch eine Ergänzung zu den bereits vorhandenen Instrumenten darstellen.

Autofahrer werden den TTC-Tachometer als sehr nützlich und intuitiv empfinden, insbesondere weil seine angezeigte Größe, die "Time to Collision", also die Zeit bis zum fiktiven Zusammenstoß, derjenigen Größe sehr nahe kommt, die der Mensch mithilfe seines visuellen Systems bildet, um die Fahraufgabe, genauer Teilaufgabe, nämlich die Abstandsregelung zum Vorderfahrzeug, wahrzunehmen.

Der TTC-Tachometer eignet sich hervorragend zum Einsatz in Kombination mit einem ACC-Fahrerassistenzsystem (ACC = Adaptive Cruise Control), das den Abstand zu einem oder mehreren vorausfahrenden Fahrzeugen regelt. ACC-Systeme sind bereits bekannt und basieren meist auf Radar-Sensorik, teilweise auch auf Lidar-Sensorik. Neuerdings werden auch mehrere Sensoren fusioniert, beispielsweise Radar und Video, um die ACC-Funktion zu verbessern und zu erweitern.

Während der normalen ACC-Folgefahrt hinter einem so genannten Zielobjekt muss der Fahrer Gas und Bremse nicht betätigen. Wenn das System nicht mehr in der Lage ist, dem Objekt zu folgen, fordert es den Fahrer zur Übernahme der Fahraufgabe auf. Während der Nutzung des ACC-Systems wird der Fahrer meist nur rudimentär oder gar nicht über den Systemzustand der ACC-Regelung informiert. Eine Ursache hierfür ist teilweise die Unsicherheit der Messdaten, mit denen der ACC-Regler arbeiten muss.

Jüngste Entwicklungen zeigen jedoch auf, dass mit einer monokularen Kamera ein videobasiertes Tracking, also eine Objektverfolgung, in bisher nicht bekannter Qualität möglich sein wird.

Dieses bildbasierte Tracking eröffnet die Möglichkeit, zu jedem Zeitpunkt und im Takt der Bildaufnahme, typisch sind 25 Bilder pro Sekunde, jedoch auch andere Takte sind möglich, die Time to Collision (TTC) zu einem oder mehreren Zielobjekt(en) zu bestimmen.

Auch der Mensch als Fahrer ist alleine auf die visuelle Information angewiesen, um den Abstand zum Vorderfahrzeug zu regeln. Da in den typischen Entfernungsbereichen bis zum Vorderfahrzeug das stereoskopische Sehen kaum noch eine Rolle spielt, bestimmt der Mensch mit seinen Augen insbesondere Größenänderungen des Abbilds des Zielobjekts, um zu erkennen, ob sich dieses relativ betrachtet annähert oder entfernt. Diese Aufgabe kann demnach auch mit nur einem Auge gut erfüllt werden, was die Erfahrung bestätigt.

Ein bildbasiertes Tracking-Verfahren kann ebenfalls nur eine Kamera benötigen und bestimmt die Größenänderung des Objekts mit einer wesentlich höheren Präzision, als dies der Mensch vermag.

Aufgrund der hohen Qualität der Messergebnisse wird es daher möglich, damit ein Anzeigeinstrument wie einen TTC-Tachometer anzusteuern und ein korrektes Signal anzuzeigen, dass frei von auffälligen Störungen ist.

Auch wird es möglich, die Signale der bisher üblichen Sensoren, wie Radar bzw. Lidar, zur Ansteuerung des TTC-Tachometers zu verwenden, ggf. nach geeigneter Filterung.

Die vorliegende Erfindung schafft ein Verfahren zum Bestimmen einer Steuerinformation zum Anzeigen eines Fahrzustands eines Fahrzeugs mittels einer Anzeigeeinrichtung des Fahrzeugs, wobei das Verfahren die folgenden Schritte umfasst:

> Ermitteln eines sicheren Fahrzustands des Fahrzeugs bei dem keine Gefahr einer Kollision mit einem Objekt besteht;

> Ermitteln eines aktuellen Fahrzustands des Fahrzeugs in Bezug zu dem sicheren Fahrzustand; und

> Bestimmen der Steuerinformation zum Ansteuern der Anzeigeeinrichtung basierend auf dem sicheren Fahrzustand und dem aktuellen Fahrzustand, wobei die Steuerinformation ausgebildet ist, um eine Anzeige einer Information über den aktuellen Fahrzustand in Bezug zu einer Information über den sicheren Fahrzustand durch die Anzeigeeinrichtung zu bewirken.

Die Anzeigeeinrichtung kann in einer Instrumententafel des Fahrzeugs angeordnet sein und beispielsweise als TCC-Tachometer ausgeführt sein. Bei dem Objekt kann es sich um ein stationäres Objekt, ein stationäres Fremdfahrzeug oder ein vorausfahrendes oder nachfolgendes Fremdfahrzeughandeln. Die Anzeigeeinrichtung kann eine Skala und zusätzlich oder alternativ unterschiedliche Sektoren aufweisen. Mittels der Anzeigeeinrichtung kann dem Fahrer angezeigt werden, wie sich ein aktueller Fahrzustand in Relation zu einem sicheren Fahrzustand verhält. Bei dem sicheren Fahrzustand ändert sich ein Abstand zwischen dem Fahrzeug und einem Fremdfahrzeug nicht oder nur innerhalb eines vorgegebenen Toleranzbereichs. Daher besteht keine Kollisionsgefahr. Entspricht der aktuelle Fahrzustand dem sicheren Fahrzustand, so kann der aktuelle Fahrzustand als sicherer Fahrzustand angezeigt werden, beispielsweise indem sich ein Zeiger, der den aktuellen Fahrzustand anzeigt, innerhalb eines dem sicheren Fahrzustand zugeordneten Sektors der Anzeigeeinrichtung befindet. Ändert sich der Abstand zu dem Fremdfahrzeug, so entspricht der aktuelle Fahrzustand nicht dem sicheren Fahrzustand. In diesem Fall kann mittels der Anzeigeeinrichtung eine Abweichung zwischen dem aktuellen Fahrzustand und dem sicheren Fahrzustand angezeigt werden, beispielsweise indem sich der Zeiger, der den aktuellen Fahrzustand anzeigt, außerhalb des dem sicheren Fahrzustand zugeordneten Sektors der Anzeigeeinrichtung befindet. Somit kann der aktuelle Fahrzustand entweder einem Zustand entsprechen, in dem eine Gefahr einer Kollision zwischen dem Fahrzeug und dem Fremdfahrzeug besteht, oder einem Zustand entsprechen, in dem keine Gefahr einer Kollision zwischen dem Fahrzeug und dem Fremdfahrzeug besteht. Der Zustand, dass keine Gefahr einer Kollision besteht, kann unterteilt werden in den sicheren Fahrzustand und in einen weiteren Zustand, in dem sich ein Abstand zwischen dem Fahrzeug und dem Fremdfahrzeug fortlaufend erhöht. Mittels einer Zusatzinformation kann dem Fahrer angezeigt werden, dass er ausgehend von dem aktuellen Fahrzustand das Fahrzeug entweder durch eine Verringerung der Geschwindigkeit oder durch eine Erhöhung der Geschwindigkeit in den sicheren Fahrzustand überführen kann. Um sowohl den sicheren Fahrzustand als auch den aktuellen Fahrzustand zu ermitteln, können aktuelle Messdaten ausgewertet werden. Die Messdaten können über Schnittstellen von Sensoren des Fahrzeugs empfangen werden. Die Messdaten können das Fahrzeug betreffende Daten, beispielsweise die Geschwindigkeit des Fahrzeugs umfassen. Auch können die Messdaten das Fremdfahrzeug betreffende Daten umfassen, beispielsweise einen Abstand oder eine Relativgeschwindigkeit zwischen dem Fahrzeug und dem Fremdfahrzeug. Eine Änderung oder Beibehaltung des Abstands zwischen dem Fahrzeug und dem Fremdfahrzeug kann auch durch eine Auswertung zeitlich aufeinander folgender Bildaufnahmen des Fremdfahrzeugs bestimmt werden, die durch eine Bilderfassungseinrichtung des Fahrzeugs erfasst wurden. So kann in einer ersten Bildaufnahme eine erste Abmessung einer in der Bildaufnahme abgebildeten Struktur des Fremdfahrzeugs bestimmt werden und in einer zeitlich nachfolgend erfassten zweiten Bildaufnahme eine zweite Abmessung derselben in der Bildaufnahme abgebildeten Struktur des Fremdfahrzeugs bestimmt werden. Durch einen Vergleich der Abmessungen kann ermittelt werden, ob sich die Fahrzeuge einander annähern, sich voneinander entfernen oder einen konstanten Abstand beibehalten. Um den aktuellen Fahrzustand zu ermitteln, kann eine auf diese oder andere Weise ermittelte Abstandsänderung zwischen dem Fahrzeug und dem Fremdfahrzeug über die Zeit ausgewertet werden. Auch kann ein aktueller Geschwindigkeitsunterschied zwischen dem Fahrzeug und dem Fremdfahrzeug ausgewertet werden. Bleibt der Abstand konstant oder besteht kein Geschwindigkeitsunterschied, so liegt der sichere Fahrzustand vor. Ändert sich der Abstand oder besteht ein Geschwindigkeitsunterschied, so entspricht der aktuelle Fahrzustand nicht dem sicheren Fahrzustand. Dem sicheren Fahrzustand kann eine Geschwindigkeit zugeordnet sein, bei deren Einhaltung keine Kollisionsgefahr besteht. Dem aktuellen Fahrzustand kann die Relativgeschwindigkeit zugeordnet sein. Auch kann dem aktuellen Fahrzustand ein sich aus der Relativgeschwindigkeit und dem Abstand zwischen den Fahrzeugen basierender Wert zugeordnet sein. Ist die Relativgeschwindigkeit ungleich Null, so besteht die Gefahr eines Zusammenstoßes oder einer eventuell nicht beabsichtigten Vergrößerung des Abstands zwischen den Fahrzeugen. Die Relativgeschwindigkeit ist abhängig von der Geschwindigkeit des Fahrzeugs. Über die Anzeigeeinrichtung kann somit eine Abweichung dargestellt werden, die einer Abweichung der aktuellen Geschwindigkeit von der sicheren Geschwindigkeit entspricht oder auf dieser Abweichung basiert. Dabei kann die Abweichung in einer geeigneten Skalierung dargestellt werden. Die Steuerinformation kann als elektrisches Signal über eine Schnittstelle zu der Anzeigeeinrichtung bereitgestellt werden.

Gemäß einer Ausführungsform kann die Information über den aktuellen Zustand eine Information über eine Zeitdauer bis zu einer Kollision zwischen dem Fahrzeug und dem Objekt umfassen. Dazu kann ein Wert der Zeitdauer direkt angezeigt werden oder ein Zeiger, der den aktuellen Fahrzustand anzeigt, kann auf einen entsprechenden Wert zeigen. Dies gibt dem Fahrer einen Hinweis wie schnell er reagieren muss, um den sicheren Fahrzustand zu erreichen.

Die Anzeigeeinrichtung kann eine dem sicheren Fahrzustand zugeordneten Markierung aufweisen. In diesem Fall kann das Verfahren einen Schritt des Durchführens eines Vergleichs zwischen dem sicheren Fahrzustand und dem aktuellen Fahrzustand umfassen und die Steuerinformation kann ausgebildet sein, um die Information über den aktuellen Fahrzustand abhängig von dem Vergleich in Bezug zu der Markierung darzustellen. Beispielsweise kann dem sicheren Fahrzustand eine sichere Geschwindigkeit des Fahrzeugs zugeordnet sein, bei der keine Kollisionsgefahr besteht. In dem Vergleich kann die sichere Geschwindigkeit mit einer aktuellen Geschwindigkeit des Fahrzeugs verglichen werden. Ein durch den Vergleich ermittelter Geschwindigkeitsunterschied kann an der Anzeigeeinrichtung dargestellt werden. Der Bezug kann beispielsweise durch einen Abstand zwischen der Markierung und einen den aktuellen Fahrzustand anzeigenden Anzeigeelement, beispielsweise einen Zeiger, dargestellt werden. Beispielsweise kann der Abstand umso größer sein, je größer der Geschwindigkeitsunterschied ist. Die dem sicheren Fahrzustand zugeordnete Markierung erleichtert dem Fahrer die Einschätzung des aktuellen Fahrzustands.

Dabei kann die Anzeigeeinrichtung einen ersten Sektor umfassen, der einem ersten Fahrzustand zugeordnet ist, bei dem ein Abstand zwischen dem Fahrzeug und dem Objekt zumindest annähernd konstant bleibt, einen zweiten Sektor umfassen, der einem zweiten Fahrzustand zugeordnet ist, bei dem sich der Abstand zwischen dem Fahrzeug und dem Objekt reduziert, und einen dritten Sektor umfassen, der einem dritten Fahrzustand zugeordnet ist, bei dem sich der Abstand zwischen dem Fahrzeug und dem Objekt vergrößert. Die Steuerinformation kann ausgebildet sein, um den aktuellen Fahrzustand abhängig von dem Vergleich in dem ersten, dem zweiten oder den dritten Sektor darzustellen. Die Sektoren können farblich unterschiedlich gestaltet sein. Beispielsweise kann der zweite Sektor eine Warnfarbe umfassen. Durch die Sektoren kann der Fahrer die auf der Anzeigeeinrichtung dargestellte Information leichter aufnehmen. Alternativ kann die Anzeigeeinrichtung eine andere geeignete Anzahl an Sektoren aufweisen. Auch kann die Anzeigeeinrichtung anstelle eines Sektors eine Linie oder einen Punkt aufweisen. So kann die Anzeigeeinrichtung beispielsweise auch 2 ½ Sektoren, also zwei Sektoren und einen Punkt, vier Sektoren oder fünf Sektoren aufweisen. Den unterschiedlichen Sektoren, Linien oder Punkten kann jeweils ein geeigneter Fahrzustand zugeordnet sein.

Hierbei kann die Steuerinformation ausgebildet ein, um ein Größenverhältnis zwischen dem ersten, dem zweiten und dem dritten Sektor abhängig von der Information über die Geschwindigkeit des Fahrzeugs einzustellen. Dadurch kann der auf der Anzeigeeinrichtung zur Verfügung stehender Anzeigeraum optimal zur Anzeige der relevanten Informationen ausgenutzt werden.

Die vorliegende Erfindung schafft ferner eine Anzeigeeinrichtung zum Anzeigen eines Fahrzustands eines Fahrzeugs, mit folgenden Merkmalen:

einem ersten Anzeigebereich, der einem ersten Fahrzustand zugeordnet ist, bei dem ein Abstand zwischen dem Fahrzeug und einem Objekt zumindest annähernd konstant bleibt;

einem zweiten Anzeigebereich, der einem zweiten Fahrzustand zugeordnet ist, bei dem sich der Abstand zwischen dem Fahrzeug und dem Objekt reduziert;

einem dritten Anzeigebereich, der einem dritten Fahrzustand zugeordnet ist, bei dem sich der Abstand zwischen dem Fahrzeug und dem Objekt vergrößert; und

einer Schnittstelle zum Empfangen einer Steuerinformation zum Ansteuern der Anzeigeeinrichtung, um eine Anzeige einer Information über einen aktuellen Fahrzustand des Fahrzeugs in Bezug zu einer Information über einen sicheren Fahrzustand des Fahrzeugs zu bewirken.

Die Anzeigeeinrichtung kann ein analoges Instrument, beispielsweise ein Zeigerinstrument sein. Auch kann die die Anzeigeeinrichtung einen Bildschirm aufweisen, auf dem die relevanten Informationen eingeblendet werden. Jedem Anzeigebereich kann ein Teil einer für den Fahrer sichtbaren Oberfläche der Anzeigeeinrichtung oder eines von der Anzeigeeinrichtung verwendeten Anzeigeelements zugeordnet sein. Ein Anzeigebereich kann ein Flächenelement, eine Linie oder einen Punkt umfassen. Das Flächenelement kann beispielsweise ein Sektor oder ein Streifen darstellen.

Gemäß einer Ausführungsform weist die Anzeigeeinrichtung einen Anzeigebereich zum Anzeigen eines Abbilds des Objekts auf. Dies erleichtert dem Fahrer eine Verbindung zwischen dem realen Verkehrsgeschehen und der angezeigten Information zu finden.

Die vorliegende Erfindung schafft ferner ein Verfahren zur Unterstützung eines Fahrers eines Fahrzeugs bei einer Fahraufgabe mittels einer Anzeigeeinrichtung, das die folgenden Schritte umfasst:

Bestimmen einer Steuerinformation gemäß einer Ausführungsform der vorliegenden Erfindung;

Bereitstellen der Steuerinformation an eine Anzeigeeinrichtung gemäß einer Ausführungsform der vorliegenden Erfindung; und

Anzeigen einer Information über einen aktuellen Fahrzustand in Bezug zu einer Information über einen sicheren Fahrzustand des Fahrzeugs mittels der Anzeigeeinrichtung, ansprechend auf die Steuerinformation.

Die vorliegende Erfindung schafft ferner eine Vorrichtung, die ausgebildet ist, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden. Unter einer Vorrichtung kann vorliegend ein elektrisches Gerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem, einem Computer entsprechenden Gerät ausgeführt wird.

Die Erfindung wird nachstehend anhand der beigefügten Zeichnungen beispielhaft näher erläutert. Es zeigen:

Fig. 1      ein Ablaufdiagramm eines Verfahrens zum Anzeigen eines sicheren Fahrzustands eines Fahrzeugs gemäß einem Ausführungsbeispiel der vorliegenden Erfindung;

Fig. 2      eine Darstellung einer Anzeigeeinrichtung gemäß einem Ausführungsbeispiel der vorliegenden Erfindung;

Fig. 3      eine Darstellung einer weiteren Anzeigeeinrichtung gemäß einem Ausführungsbeispiel der vorliegenden Erfindung;

Fig. 4      eine Darstellung eines Ausschnitts einer Anzeigeeinrichtung;

Fig. 5      eine weitere Darstellung eines Ausschnitts einer Anzeigeeinrichtung;

Fig. 6      eine Darstellung einer Anzeigeeinrichtung gemäß einem Ausführungsbeispiel der vorliegenden Erfindung;

Fig. 7      eine weitere Darstellung einer weiteren Anzeigeeinrichtung gemäß einem Ausführungsbeispiel der vorliegenden Erfindung;

Fig. 8      eine weitere Darstellung einer weiteren Anzeigeeinrichtung gemäß einem Ausführungsbeispiel der vorliegenden Erfindung;

Fig. 9      eine weitere Darstellung einer Anzeige gemäß einem Ausführungsbeispiel der vorliegenden Erfindung; und

Fig. 10      eine weitere Darstellung einer weiteren Anzeigeeinrichtung gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

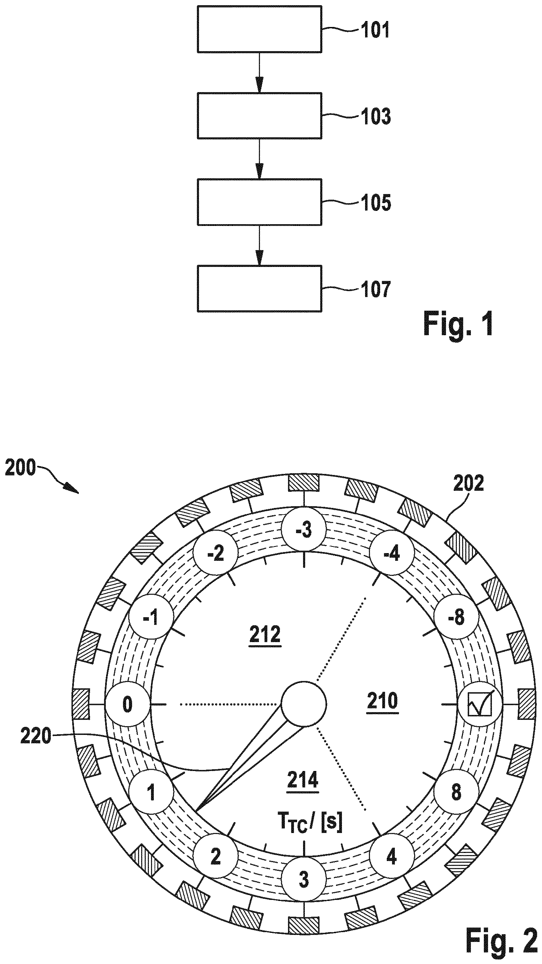

Fig. 1 zeigt ein Ablaufdiagramm eines Verfahrens zum Anzeigen eines sicheren Fahrzustands eines Fahrzeugs gemäß einem Ausführungsbeispiel der vorliegenden Erfindung. In einem Schritt 101 wird ein sicherer Fahrzustands des Fahrzeugs ermittelt, bei dem keine Gefahr einer Kollision mit dem Fremdfahrzeug besteht. In einem Schritt 103 wird ein aktueller Fahrzustand des Fahrzeugs ermittelt. In einem Schritt 105 wird basierend auf dem sicheren Fahrzustand und dem aktuellen Fahrzustand eine Steuerinformation zum Ansteuern einer Anzeigeeinrichtung bestimmt, die geeignet ist, um eine Anzeige einer Information über den aktuellen Fahrzustand in Bezug zu einer Information über den sicheren Fahrzustand durch die Anzeigeeinrichtung zu bewirken. In einem Schritt 107 wird die Steuerinformation an die Anzeigeeinrichtung ausgegeben, um die die Information über den aktuellen Fahrzustand in Bezug zu der Information über den sicheren Fahrzustand mittels der Anzeigeinrichtung darzustellen. Dabei kann es sich bei der Anzeigeeinrichtung um ein TTC-Tachometer handeln, wie es in den nachfolgenden Ausführungsbeispielen in unterschiedlichen Varianten beschrieben ist.

Gemäß einem Ausführungsbeispiel wird mittels der Anzeigeeinrichtung die Time to Collision $T_{TC}$, also die Zeit bis zu einer möglichen Kollision, angezeigt.

Die TTC ist zwar allgemein bekannt, soll hier aber trotzdem kurz erläutert werden, insbesondere im Hinblick auf ihre visuelle oder Kamera-basierte Bestimmung.

Betrachtet wird ein vereinfachtes Szenario mit konstanter Differenzgeschwindigkeit $v = v_{Ego} - v_{Obj}$ zwischen dem Ego-Fahrzeug und einem kollisionsrelevanten Objekt. Negative Differenzgeschwindigkeit bedeutet, dass sich die Objekte aufeinander zu bewegen. Der aktuelle Abstand sei d. Die Zeit bis zur Kollision ist dann

$$T_{TC} = -\frac{d}{v}.$$

Eine mit dem Ego-Fahrzeug verbundene Kamera verfolge auf dem Objekt zwei Punkte, deren Abstand parallel zur Kameraebene W beträgt. Im Bild der Kamera, gemäß Lochkameramodell, mit Brennweite f ergibt sich somit ein Abstand

$$w = \frac{Wf}{d}.$$

Zu dem um die Zeitdifferenz T früheren Zeitpunkt galt dagegen

$$w_p = \frac{Wf}{d - vT}.$$

Definiert man $s = \dfrac{w}{w_p}$ als Skalierungsfaktor zwischen den verschieden großen Abbildern der Strecke W, so ergibt sich

$$s = \frac{w}{w_p} = \frac{d - vT}{d} = 1 - \frac{v}{d}T = 1 + \frac{T}{T_{TC}}$$

oder

$$T_{TC} = \frac{T}{s - 1}.$$

Nachfolgend werden einige typische Situationen betrachtet.

Bei einer Folgefahrt mit konstantem Abstand bleibt die Bildgröße unverändert, es gilt $w = w_p$ oder $s = 1$. Damit wird die Zeit bis zu einer Kollision unendlich, $TTC = \infty$. Ein Längsregler für die Folgefahrt hinter einem Objekt, der Beschleunigung und Bremsung steuert, wird also diesen Punkt $TTC = \infty$ anstreben.

Bei einer Annäherung an ein Objekt gilt $w > w_p$ oder $s > 1$. Demnach ist die TTC positivwertig. Ein Zahlenbeispiel: Mit einer Bildperiode von $T = 40$ ms und Abständen von $w = 102$ Pixel und $w_p = 100$ Pixel ergibt sich $TTC = 2,0$ s.

Entfernt sich das Objekt, z. B. ein Überholer, so gilt $w < w_p$ oder $s < 1$. Die TTC ist negativwertig.

Zum Zeitpunkt der Kollision $TTC = 0$ oder sehr nahe davor oder danach geht der Skalierungsfaktor s gegen $+\infty$. oder $-\infty$.

Die Möglichkeit einer bildbasierten Bestimmung der TTC, soweit bis hierher dargestellt, ist seit Jahrzehnten bekannt.

Die bisher beschriebene TTC bezieht sich auf den Zeitpunkt der Kollision des Objekts, genauer der auf dem Objekt beobachteten Punkte, mit der Kamera. Für die praktische Anwendung ist jedoch der Kollisionszeitpunkt mit der eigenen Fahrzeugfront von Interesse.

Mit Kenntnis der Ego-Geschwindigkeit $v_{Ego}$ kann die $T_{TCCam}$ bezüglich der Kamera umgerechnet werden in eine $T_{TCFront}$ bezüglich der Fahrzeugfront, z.B. der Stoßstange: $T_{TCFront} = T_{TCCam} - l/v_{Ego}$. Dabei ist die Länge l der Abstand in Längsrichtung, der Fahrtrichtung, zwischen Kamera und Fahrzeugfront. Beispiel: Bei $l = 2$ m und $V_{Ego} = 20$ m/s ist $T_{TCFront}$ um 0,1 s geringer als $T_{TCCam}$.

Diese Berechnung stellt eine Vereinfachung dar, weil sie die Geschwindigkeit des Objekts $v_{Obj}$ unberücksichtigt lässt. Da bei dem betrachteten Szenario der Vorwärtsfahrt des Ego-Fahrzeugs und abgesehen von der Rückwärtsfahrt des Vorderfahrzeugs die Ego-Geschwindigkeit betragsmäßig immer größer als die Differenzgeschwindigkeit ist, handelt es sich bei der Vereinfachung um eine Abschätzung zur sicheren Seite. Die so bestimmte $T_{TCFront}$ ist also in der Regel etwas geringer als die tatsächliche TTC.

Gemäß einem Ausführungsbeispiel wird dem Fahrer die $T_{TCFront}$ angezeigt, eventuell sogar eine TTC, die sich auf eine Ebene noch vor der Fahrzeugfront bezieht, wodurch sich eine Sicherheitsreserve ergibt.

Fig. 2 zeigt eine Darstellung einer Anzeigeeinrichtung 200 gemäß einem Ausführungsbeispiel der vorliegenden Erfindung. Die Anzeigeeinrichtung 200 weist eine kreisrunde Skala 202 auf. Auf der Skala 202 ist links die Ziffer 0 und rechts ein Symbol in Form eines Häkchens dargestellt. In der oberen Hälfte sind auf der Skala 202 ausgehend von der Ziffer 0 die Ziffern -1, -2, -3, -4 und -8 dargestellt. In der unteren Hälfte sind auf der Skala 202 ausgehend von der Ziffer 0 die Ziffern 1, 2, 3, 4 und 8 dargestellt. Die Ziffern ermöglichen eine grundsätzliche Anzeige der TTC. Hier geben die Ziffern eine Zeit bis zur Kollision in Sekunden an. Die Skala 202 umschließt einen Kreis, der in drei Sektoren 210, 212, 214 aufgeteilt ist. Bei der Ziffer 0 ist eine Sektorengrenze zwischen den Sektoren 212, 214. Bei der Ziffer -4 ist eine Sektorengrenze zwischen den Sektoren 210, 212. Bei der Ziffer 4 ist eine Sektorengrenze zwischen den Sektoren 210, 214. Innerhalb des Sektors 210 kann das Wort "Folgen" dargestellt sein. Innerhalb des Sektors 212 kann das Wort "Beschleunigen!" dargestellt sein. Innerhalb des Sektors 214 kann das Wort "Bremsen!" dargestellt sein. Alternativ können die Aufforderungen "Folgen" "Bremsen" und "Beschleunigen" auch in Form von Symbolen, sogenannten Icons, sinnvoll dargestellt werden. Ein Zeiger 220 stellt einen aktuellen Fahrzustand dar. Der Zeiger 220 zeigt aktuell im Sektor 214 auf die Mitte zwischen den Ziffern 1 und 2. Bei einer Veränderung des aktuellen Fahrzustands oder einer Veränderung des sicheren Fahrzustands verändert der Zeiger 220 seine Position. Die Elemente der gezeigten Anzeigeeinrichtung 200 können vollständig oder teilweise auf einem Bildschirm angezeigt oder in ein Sichtfeld des Fahrers projiziert werden.

Die in Fig. 2 gezeigte Anzeigeeinrichtung 200 stellt eine mögliche Ausgestaltung für einen TTC-Tachometer, hier als Zeigerinstrument ausgeführt, dar. Für eine ideale Folgefahrt muss der Zeiger 220, mittels Betätigung von Gas und Bremse, nach rechts auf den mit einem Häkchen gekennzeichneten Punkt der Skala 202 gesteuert werden.

Bei einer Folgefahrt in konstantem Abstand ist TTC = ∞. Dieser Idealpunkt ist sowohl von einem automatischen Abstandsregler (ACC) als auch von einem menschlichen Fahrer anzustreben. Dieser Punkt ist hier mit einem Häkchen gekennzeichnet. Der Punkt stellt den Sollzustand dar.

Des Weiteren ist die Skala 202 zu sehen, auf der die TTC in Sekunden aufgetragen ist. Die gepunkteten Linien unterteilen die Skala 202 in die drei Sektoren 210, 212, 214 von hier jeweils 120°.

Wenn sich der Zeiger 220 im unteren linken Sektor 214, gekennzeichnet mit "Bremsen!", von TTC von 0 s bis 4 s befindet, ist ein Bremseingriff erforderlich, und zwar umso dringender, je näher der Zeiger der Ziffer Null kommt.

Im oberen linken Sektor 212, gekennzeichnet mit "Beschleunigen!" von TTC von 0 s bis -4 s darf bzw. sollte beschleunigt werden, falls dem Objekt gefolgt werden soll.

Befindet sich der Zeiger im rechten Sektor 210, gekennzeichnet mit "Folgen", so ist keine oder noch keine Aktivität dringend erforderlich.

Während für die anderen beiden Sektoren 212, 114 hier eine lineare Skala 202, also ein linearer Verlauf der TTC mit dem Zeigerwinkel, gewählt wurde, ist sie im rechten Feld 210 stark nichtlinear. Wie man sieht, verläuft die Skala 202 durch den Unendlich-Punkt, genau genommen fallen hier -∞ und +∞ zusammen. Eine nichtlineare Skala 220 für die TTC ist zumindest für diesen Sektor 210 erforderlich.

Solche technischen Details muss der Fahrer aber weder kennen noch verstehen. Für den Fahrer ist lediglich wichtig zu wissen, wie er mit Gas und Bremse die Stellung des Zeigers 220 beeinflussen kann und dass er den Zeiger 220 möglichst in Nähe der Sollpunkts halten sollte, der natürlich auch anders als durch ein Häkchen gekennzeichnet bzw. hervorgehoben sein kann.

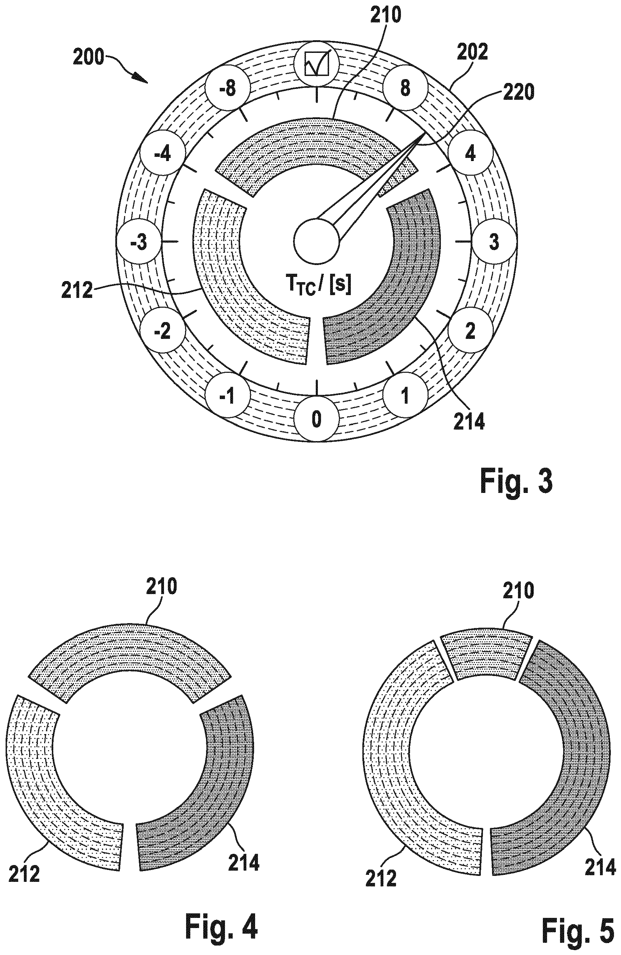

Fig. 3 zeigt einen TTC-Tachometer 200, gemäß einem weiteren Ausführungsbeispiel der vorliegenden Erfindung. Der Unendlich-Punkt oder Soll-Punkt befindet sich hier oben. Ein weiterer Unterschied zu dem in Fig. 2 gezeigten TTC-Tachometer besteht darin, dass die Sektoren 210, 212, 214 farblich ausgestaltet sind. So ist der Sektor 210 grün, der Sektor 212 blau und der Sektor 214 rot dargestellt. Wiederum kann innerhalb der Sektoren 210, 212, 214 die Ausdrücke "Folgen", "Bremsen!" und "Beschleunigen!" dargestellt sein. Auch sind die Sektoren 210, 212, 214 hier durch ringförmige Bereiche dargestellt.

Somit zeigt Fig. 3 eine alternative Form des TTC-Tachometers 200. Dieses TTC-Tachometer 200 unterscheidet sich von dem in Fig. 2 gezeigten TTC-Tachometer 200 zunächst in der Orientierung der Skala 202. Der Punkt, auf dem der Zeiger 220 gehalten werden soll, befindet sich hier oben.

Möglicherweise stellt dies die intuitivste Ausführung dar, denn die Ähnlichkeit mit dem Tachometer für die Geschwindigkeit ist hier groß. Befindet sich der Zeiger 220 links unten, darf beschleunigt werden, befindet er sich weit rechts, steigt die Gefahr.

Zusätzlich sind die Sektoren 210, 212, 214 gemäß diesem Ausführungsbeispiel mit bewusst ausgewählten Farben hinterlegt.

Blau steht für "freie Fahrt", eine Assoziation z.B. zur blauen Anzeigeleuchte für das Fernlicht.

Rot steht für "Bremsen", so wie die roten Bremslichter des Vorderfahrzeugs oder die rote Ampel oder das rote Stopp-Zeichen.

Grün steht für "korrektes" Fahren, aber auch für "ökonomische" Fahrweise. Ein Fahrer, der den grünen Bereich bewusst ausnutzt, um den Zeiger darin "pendeln" zu lassen, also häufiges Beschleunigen und Bremsen vermeidet, ist automatisch auch ökonomisch unterwegs.

Die Figuren 4 und 5 zeigen jeweils eine Darstellung eines Ausschnitts einer Anzeigeeinrichtung mit adaptiven Sektoren 210, 212, 214 gemäß einem Ausführungsbeispiel der vorliegenden Erfindung. Gemäß diesem Ausführungsbeispiel können die Größen der Sektoren 210, 212, 214 an die Fahrzeuggeschwindigkeit angepasst werden. Bei hoher Geschwindigkeit, gezeigt in Fig. 5, ergibt sich für die Folgefahrt ein schmalerer grüner Bereich in Form des Sektors 210 als bei niedriger Geschwindigkeit, gezeigt in Fig. 4. Die anderen Sektoren 212, 214 werden entsprechend in ihrer Größe angepasst. Der Sektor 212 ist in blau und der Sektor 214 in rot dargestellt. Wiederum kann innerhalb der Sektoren 210, 212, 214 die Ausdrücke "Folgen", "Bremsen!" und "Beschleunigen!" dargestellt sein.

Gemäß diesem Ausführungsbeispiel werden die Sektorengrößen in Abhängigkeit von der Geschwindigkeit variiert, wie es in Fig. 4 gezeigt ist. Dies liegt darin begründet, dass die Zeit für eine Bremsung bis in den Stillstand etwa linear mit $v_{Ego}$ wächst, bei angenommener konstanter Maximalverzögerung.

Das Zielobjekt benötigt zwar im Normalfall auch eine ähnliche Bremszeit, was eine zusätzliche Sicherheitsreserve gibt. Diese Sicherheitsreserve sollte jedoch nicht ausgenutzt werden, denn sie steht nicht in allen Situationen zur Verfügung, z. B. beim Aufprall des Zielobjekts auf ein Stauende oder einer Massenkarambolage.

Der grüne Bereich 210 kann beispielsweise so ausgelegt werden, dass er etwa bei der Gesamtzeit beginnt, die sich aus der Summation von Verzögerungszeit, Reaktionszeit des Menschen und Latenzzeit des Bremssystems ergibt.

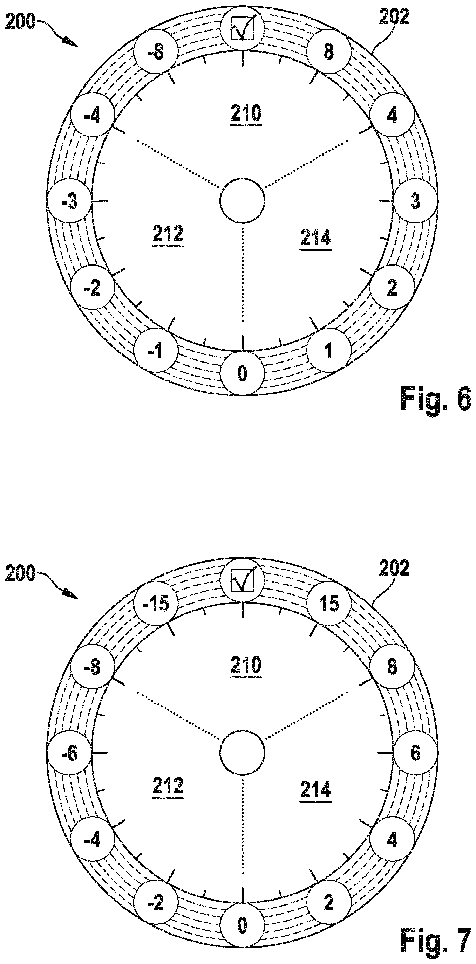

Die Figuren 6 und 7 zeigen jeweils eine Darstellung einer Anzeigeeinrichtung 200 mit einer adaptiven Spreizung der Skala 202 gemäß einem Ausführungsbeispiel der vorliegenden Erfindung. Gemäß diesem Ausführungsbeispiel können anstatt der Sektorengrößen der Sektoren 210, 212, 214 die Skalen 202 an die Fahrzeuggeschwindigkeit angepasst werden. In Fig. 6 ist die Skala 202 für niedrige Geschwindigkeit angepasst. In Fig. 7 ist die Skala 202 für eine höhere Geschwindigkeit angepasst. Die Ziffern der Skala 202 in Fig. 7 sind demnach 0, 2, 4, 6, 8, 15 und -2, -4, -6, -8, -15. Wiederum kann innerhalb der Sektoren 210, 212, 214 die Ausdrücke "Folgen", "Bremsen!" und "Beschleunigen!" dargestellt sein. Bei der Ziffer 0 ist eine Sektorengrenze zwischen den Sektoren 212, 214. Bei der Ziffer -8 ist eine Sektorengrenze zwischen den Sektoren 210, 212. Bei der Ziffer 8 ist eine Sektorengrenze zwischen den Sektoren 210, 214.

Gemäß diesem Ausführungsbeispiel können alternativ zu einer Anpassung der Sektoren 210, 212, 214 auch die Skalenwerte der Skala 202 geändert werden, indem beispielsweise die Skalenstriche und die Ziffern abhängig von der Eigengeschwindigkeit "wandern". Diese Spreizung der Skala 202 ist leicht zu realisieren, wenn der TTC-Tachometer 200 teilweise oder ganz als Display ausgeführt ist. Die Figuren 6 und 7 zeigen ein Beispiel für eine entsprechende Skalenanpassung.

Gemäß einem Ausführungsbeispiel der vorliegenden Erfindung wird ein Eingriff des Fahrers oder des Fahrdynamikprogramms in die Darstellung der Anzeigeeinrichtung ermöglicht.

Es kann sinnvoll sein, dem Fahrer Eingriffsmöglichkeiten in die Darstellung zu geben. Beispielsweise könnte er die Größe der Sektoren 210, 212, 214 oder die Spreizung der Skala 202 durch manuelle Betätigung von Bedienelementen verändern. Dazu kann eine Steuereinrichtung zum Ansteuern der Anzeigeeinrichtung 200 eine geeignete Schnittstelle zu einem oder mehreren Bedienelementen aufweisen und ausgebildet sein, um über die Schnittstelle empfangene Daten in eine Gestaltung der von der Anzeigeeinrichtung 200 gezeigten Information einfließen zu lassen.

Ein solches Ausführungsbeispiel hat für den Fahrer den Vorteil, das Anzeigeinstrument 200 an seinen Fahrstil anpassen zu können, z. B. von "ökonomisch" über "normal" bis "sportlich-dynamisch".

Auch könnte die Art der TTC-Darstellung an die Stellung eines Wahlschalters für die Wahl des Fahrdynamikprogramms gekoppelt sein, wie er heute bereits für viele Fahrzeugmodelle verfügbar ist.

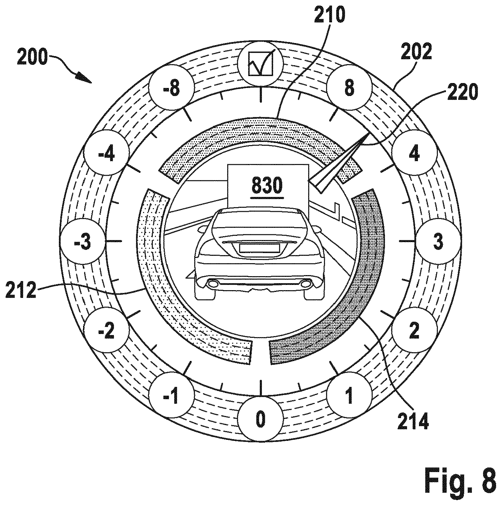

Fig. 8 zeigt einen TTC-Tachometer 200, gemäß einem weiteren Ausführungsbeispiel der vorliegenden Erfindung. Im Unterschied zu dem in Fig. 3 gezeigten Ausführungsbeispiel wird im TTC-Tachometer 200 als Zusatzinformation ein Bild 830 des zurzeit verfolgten Objekts, dem Zielobjekt, dargestellt. Vom Zeiger 220 wird nur der wesentliche Teil, die Spitze, dargestellt. Die Sektoren 210, 212, 214 sind ringförmig innerhalb der Skale 202 angeordnet. Das Bild 830 ist in einem kreisrunden, von den Sektoren 210, 212, 214 umschlossenen Innenbereich dargestellt. Das Bild 830 kann von einer an dem Fahrzeug angeordneten Kamera erfasst worden sein und über eine geeignete Schnittstelle an eine Steuereinrichtung zum Ansteuern des TTC-Tachometer 200 bereitgestellt werden. Die Anzeigeeinrichtung 200 kann entsprechend ein integriertes Video-Display mit einem automatisch gewählten Bildausschnitt 830 aufweisen.

Bei bisherigen ACC-Systemen erfährt der Fahrer nicht explizit, auf welches Zielobjekt das System gerade regelt. Bei einem kamerabasierten System oder bei einem System, das zusätzlich zu anderen Sensoren auch mindestens eine Kamera aufweist, kann das Zielobjekt dem Fahrer als Bild 830 angezeigt werden, beispielsweise in der in Fig. 8 dargestellten Form, sofern die technischen Voraussetzungen gegeben sind, hier insbesondere die Bilddarstellungsmöglichkeit.

Alle Informationen, die nötig sind, um aus dem Kamerabild das korrekte Zielobjekt "herauszuschneiden" sind bei einem solchen System vorhanden.

Wahlweise kann der Ausschnitt 830 aus dem Originalbild immer eine feste Größe aufweisen, dann skaliert das angezeigte Objekt, wie gewohnt, umgekehrt proportional zum Abstand. Andererseits ist es auch möglich, das ausgeschnittene Objekt umzuskalieren, beispielsweise so dass die angezeigte Größe des Objekts unabhängig von der Entfernung etwa gleich bleibt.

Desweiteren kann das Bild 830 des angezeigten Objekts bewusst seitlich aus der Mitte des Anzeigeinstruments 200 verschoben dargestellt werden, beispielsweise um dem Fahrer anzudeuten, dass er lenken oder gegebenenfalls die Spur wechseln sollte, um dem Objekt weiter zu folgen. Eine Verschiebung des Objekts im Bild 830 nach rechts könnte z.B. bedeuten, dass der Fahrer damit zum Lenken nach rechts aufgefordert werden soll.

Sind in einer bestimmten Situation mehrere Objekte gleichzeitig relevant, z.B. während eines Zielobjektwechsels, so können diese optional auch gleichzeitig dargestellt werden.

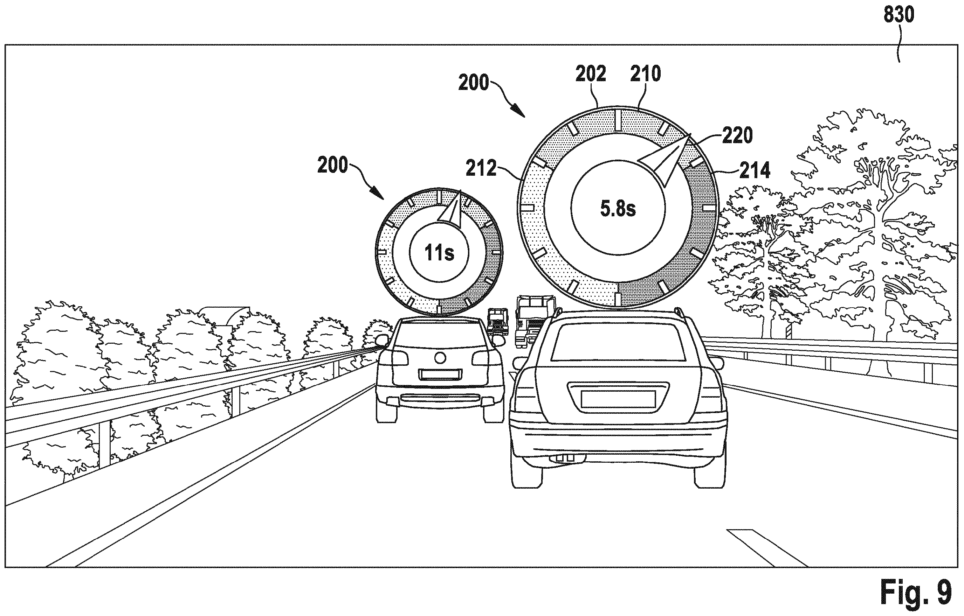

Fig. 9 zeigt eine Darstellungsmöglichkeit eines oder mehrerer TTC-Tachometer 200, gemäß einem weiteren Ausführungsbeispiel der vorliegenden Erfindung. Hierbei wird für jedes relevante Objekt jeweils ein TTC-Tachometer 200 ins Kamerabild 830 eingeblendet. Im Unterschied zu dem in Fig. 8 gezeigten Ausführungsbeispiel wird somit nicht ein Bild des Objekts in die Darstellung des TTC-Tachometers eingebettet, sondern eine Darstellung des TTC-Tachometers 200 wird in das Bild 830 des Objekts eingebettet. Der TTC-Tachometer 200 kann hierbei vereinfacht dargestellt sein. Beispielsweise kann die Skala 202 ohne Ziffern dargestellt und in die Sektoren 210, 212, 214 integriert sein. Die Sektoren 210, 212, 214 können ringförmig und in unterschiedlichen Farben dargestellt sein. In einem von den Sektoren 210, 212, 214 umschlossenen Bereich kann eine Zeit bis zu einer Kollision mit dem Objekt, dem der TTC-Tachometer 200 zugeordnet ist, angezeigt werden. Die Zeitangabe wird dabei unter der Annahme bestimmt, dass sich die Geschwindigkeiten des eigenen Fahrzeugs und des Fremdfahrzeugs nicht ändern. Die Zeitangabe kann farblich hinterlegt sein, wobei eine Farbwahl abhängig von einer Größe des durch die Zeitangabe angezeigten Werts ist. Beispielsweise kann der Wert der Zeitangabe zunächst berechnet werden und anschließend eine dem Wert zugeordnete Farbe zur Hinterlegung der Zeitangabe ausgewählt werden.

In Fig. 9 sind zwei TTC-Tachometer 200 gezeigt. Ein erster TTC-Tachometer 200 ist einem direkt voraus fahrenden erster Fahrzeug zugeordnet. Es zeigt als Zeitangabe einen Wert von 5.8s an. Die Zeitangabe ist mit einer Aufmerksamkeit erregenden gelben Farbe hinterlegt. Eine Abmessung des ersten TTC-Tachometers 200 ist an eine dargestellte Größe des ersten Fahrzeugs angepasst.

Ein zweiter TTC-Tachometer 200 ist einem sich vor dem ersten Fahrzeug befindlichen zweiten Fahrzeug zugeordnet. Es zeigt als Zeitangabe einen Wert von 11 s an. Die Zeitangabe ist mit einer Sicherheit andeutenden grünen Farbe hinterlegt. Eine Abmessung des zweiten TTC-Tachometers 200 ist an eine dargestellte Größe des zweiten Fahrzeugs angepasst. Hier wird der zweite TTC-Tachometers 200 kleiner als der erste TTC-Tachometer 200 dargestellt, wodurch für den Fahrer verdeutlicht wird, dass sich das zweite Fahrzeug weiter weg befindet, als das erste Fahrzeug.

Es können weitere TTC-Tachometer angezeigt werden. Wenn nicht genügend Platz für die Anzeige mehrerer TTC-Tachometer bereitsteht, können sich zwei oder mehr TTC-Tachometer gegenseitig teilweise oder ganz verdecken. Dabei verdecken bevorzugt die für die Fahraufgabe wichtigeren TTC-Tachometer die unwichtigeren. In der Regel sind die TTC-Tachometer mit kleinem Betrag der TTC wichtiger als diejenigen mit großem Betrag.

Gemäß diesem Ausführungsbeispiel erfolgt die Anzeige des TTC-Tachometers 200 im Kamerabild 830. Anstatt einen Kamerabildausschnitt innerhalb des TTC-Tachometers anzuzeigen, können umgekehrt auch ein oder mehrere TTC-Tachometer 200 ins Kamerabild 830 eingeblendet werden, das dem Fahrer angezeigt wird.

In dem Beispiel von Fig. 9 sind gerade zwei Objekte relevant. Daher wird für beide jeweils ein TTC-Tachometer 200 angezeigt, der sich hier mit dem Objekt mit bewegt und sich in der Größe an das Objekt im Bild 830 anpasst.

Ein großer Vorteil des Systems wird bei einer bei Blickabwendung deutlich, wenn der Fahrer seinen Blick kurzzeitig vom Verkehrsgeschehen abgewendet hatte und sich dann wieder ein Bild der neuen Lage verschaffen muss. Der Fahrer muss in dieser Situation ein Objekt erst wieder eine gewisse Zeit lang mit seinen Augen beobachten, bis er die aktuelle Entfernungsänderung, die TTC oder eine ähnliche Größe, gut einschätzen kann.

Schaut er hingegen auf den TTC-Tachometer 200, kann er sofort die für ihn wichtige Größe ablesen. Dieser Zeitgewinn ist auch ein Sicherheitsgewinn.

Weiterhin hat der Mensch als Fahrer das Problem, dass die Augen abwechselnd auf große Entfernungen zur Objektentfernung und ein kurze Entfernung entsprechend dem Abstand zum Armaturenbrett fokussieren müssen. Dieser Vorgang des Umfokussierens wird Akkomodation genannt. Die Akkomodation benötigt eine gewisse Zeit, die mit zunehmendem Alter auch noch größer wird.

Der TTC-Tachometer 200 bietet hier den Vorteil, dass während das Auge auf den Nahbereich fokussiert ist, z. B. um andere Anzeigeinstrumente oder die Navigationsinformation oder die Bordcomputer-Anzeige abzulesen, zwischendurch immer wieder die TTC abgelesen werden kann, also die wichtigste Größe für den Längseingriff. Der Fahrer kann an der TTC sogar ungefähr ablesen, wie viele Sekunden ihm noch verbleiben, bis er wieder den Verkehr direkt beobachten sollte.

Gemäß einem Ausführungsbeispiel der vorliegenden Erfindung wird eine Kombination einer optischen Anzeige mit einer akustischen Ausgabe durchgeführt.

Mancher Fahrer, sicherlich nicht jeder, würde eine Koppelung der TTC-Tachometer-Anzeige 200 mit einer geeigneten akustischen Ausgabe als Vorteil betrachten.

Bei dieser optionalen Ergänzung des TTC-Tachometers 200 werden in Abhängigkeit von der aktuellen TTC unterschiedliche akustische Signale ausgegeben, die dem Fahrer andeuten, ob er beschleunigen oder bremsen soll und in welcher Intensität der Eingriff erfolgen sollte oder ob er aktuell ohne Eingriff weiter folgen kann.

Hier besteht eine Ähnlichkeit zum akustischen Variometer im Segelflugzeug, das den Pilot laufend akustisch über Sinken und Steigen informiert, damit dieser das Flugzeug entsprechend steuern kann.

Auch ist es sinnvoll, dem Autofahrer kurze akustische Rückmeldungen über Statusänderungen zu geben, z.B. wenn das Zielobjekt gerade wechselt, verschwindet, oder erscheint.

Es ist sinnvoll, dem Fahrer die Möglichkeit zur Wahl der Lautstärke und der Art der akustischen Information zu geben.

Der Fahrer sollte auch die Möglichkeit haben, auf die Häufigkeit der akustischen Meldungen Einfluss zu nehmen. Beispielsweise kann es gewünscht sein, dass das System in der Regel still bleibt, jedoch in Situationen, in denen ein Eingriff sehr wahrscheinlich erforderlich wird, akustische Informationen auszugeben.

In dieser Stellung wird das System zu einem Warnsystem, das den Fahrer nur wenn nötig alarmiert.

Die bisherigen Abbildungen stellten den TTC-Tachometer 200 jeweils als Rundinstrument dar. Dies ist auch die bevorzugte Darstellungsform, da auf der TTC-Skala alle Zahlenwerte von -∞ bis ∞ auftreten und weil diese beiden Unendlich-Punkte auch aufeinander fallen.

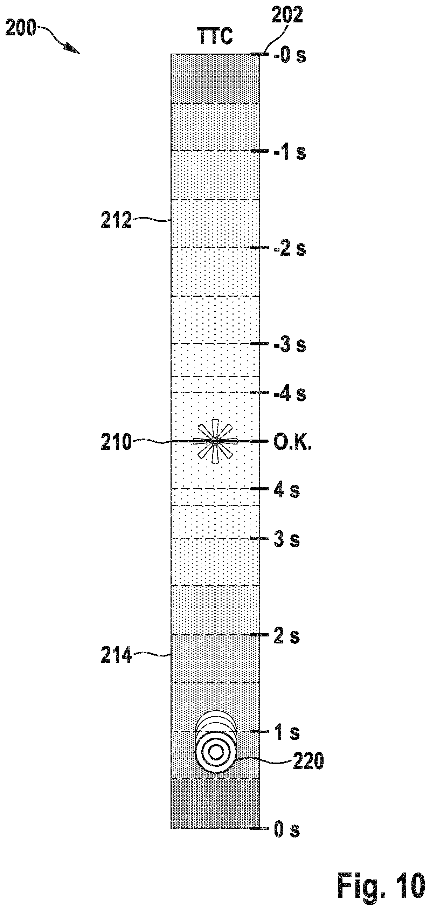

Fig. 10 zeigt einen TTC-Tachometer 200 in einer alternativen Ausgestaltung, gemäß einem weiteren Ausführungsbeispiel der vorliegenden Erfindung. Gezeigt ist eine weitere mögliche Visualisierung der TTC, hier mit einer gerader Skala 202 statt einer Rundskala. Auf der Skala 220 ist die Zeit TTC bis zur Kollision aufgetragen. In der Mitte befindet sich der Sektor 210, der beispielsweise mit dem Ausdruck "O.K." gekennzeichnet sein kann. Im unteren Bereich befindet sich der Sektor 214, der beispielsweise mit dem Ausdruck "Bremsen!" gekennzeichnet sein kann. Im oberen Bereich befindet sich der Sektor 212, der beispielsweise mit dem Ausdruck "Beschleunigen!" gekennzeichnet sein kann. Die Darstellung kann farblich hinterlegt sein, wobei von unten nach oben die Spektralfarben des Lichts von rot zu violett durchlaufen werden können. Der aktuelle Fahrzustand kann durch eine kreisrunde Markierung 220 angezeigt werden.

Bei der Verfolgung eines Objekts kann tatsächlich der Fall auftreten, dass alle Punkte der Skala 202 durchlaufen werden. Sogar ein Vorzeichenwechsel an der Stelle TTC = 0 ist möglich, nämlich wenn sich die TTC auf eine Ebene vor der Kameraebene, also z. B. die Front-Ebene, bezieht. Ein Objekt, das die Front-Ebene durchwandert, z. B. in einer Höhe oberhalb der Motorhaube, würde einen solchen Vorzeichenwechsel der TTC bewirken. Da dieser Fall aber selten anzutreffen sein wird, ist diese Stelle TTC = 0 der Skala 202 besonders gut geeignet, um diese hier aufzuschneiden. So kann aus der bisherigen Vollkreisskala bei Bedarf eine Dreiviertelkreisskala, Halbkreisskala, Drittelkreisskala, gerade Skala oder dergleichen gebildet werden.

Fig. 10 zeigt ein Beispiel für eine solche Visualisierung mit Schnitt bei TTC = 0 entlang einer geraden Skala 202.

Zusätzlich ist hier ein kontinuierlicher Farbverlauf hinterlegt. Im roten Bereich ist die TTC positiv, d. h. die Kollision steht bevor. Im tiefroten Bereich, von etwa 2s bis 0s ist dringend ein Bremseingriff erforderlich. Die schwarz-weißen Ringe bei etwa TTC = 0,8 s kennzeichnen den aktuellen Ist-Zustand und die verblassenden Ringe dahinter eine Kurzzeit-Historie. Die Daten stammen von einer realen videobasierten Messung mit $v_{Ego}$ = 20 m/s auf ein stehendes Objekt zu, wobei die Kollision hier durch ein Ausweichmanöver gerade noch verhindert wird. Im grün bis blau hinterlegten Bereich ist die TTC < 0, was bedeutet, dass sich der Abstand zum Vorderfahrzeug vergrößert.

Der anzustrebende "Unendlich-Punkt" für die Folgefahrt ist hier mit "O.K." und einem ortsfesten Stern gekennzeichnet.

Gemäß einem Ausführungsbeispiel ist eine Kombination mit Leuchtsignalen und Farben möglich. So kann der TTC-Tachometer 200 um eine Ausgabemöglichkeit für Leuchtsignale ergänzt werden. In Fig. 2 ist beispielsweise ein äußerer Kranz um den TTC-Tachometer 200 gezeigt, in dem Leuchtdioden vorgesehen sind. Hier kann der Kranz rot dargestellt sein, weil die TTC hier gering ist.

Wenn diese Lichtquellen zeitlich veränderliche oder in der Farbe veränderliche Lichtsignale abgeben, kann die Wahrnehmbarkeit der TTC-Ausgabe damit verbessert werden. Beispielsweise könnten die Lichtquellen rot blinken, wenn ein Bremseingriff erforderlich ist und ihre Blinkfrequenz erhöhen, wenn der Eingriff dringender wird.

Damit wird auch eine Beeinflussung der Aufmerksamkeit des Fahrers erreicht: Die Leuchtsignale, insbesondere wenn sie zeitlich variieren, können vom Fahrer sogar in dessen peripherem Sichtfeld wahrgenommen werden, also selbst wenn er nicht direkt auf den TTC-Tachometer 200 schaut.

Mit dem Wechsel von Lichtfarben, wobei der Wechsel kontinuierlich oder umschaltend stattfindet, kann dem Fahrer beispielsweise angezeigt werden, in welchem Modus er sich gerade befindet (Folgen, Bremsen!, Beschleunigen!). Die Lichtfarben können dabei nach der anhand von Fig. 3 beschriebenen bevorzugten Wahl der Farben gewählt werden.

Statt eines Kranzes von Leuchtdioden gibt es zahllose andere Möglichkeiten zur Einbeziehung von Lichtquellen, beispielsweise eine wechselnde Beleuchtung des Zeigers 220.

Weiterhin ist es sinnvoll, dem Fahrer Intervalle auf dem TTC-Tachometer 200 durch Leuchtquellen, z. B. als Leuchtband, anzuzeigen. Dies trifft insbesondere auf den anhand der Figuren 4 und 5 beschriebenen variabel großen Abschnitt 210 "Folgen" zu.

Die Lichtquellen können auch an einem anderen Ort außerhalb des TTC-Tachometers 200 angebracht sein, beispielsweise am unteren Rand der Frontscheibe.

Gemäß einem Ausführungsbeispiel der vorliegenden Erfindung wird ein Head-Up-Display mit TTC-Tachometer realisiert.

Alternativ zur Anbringung des TTC-Tachometers 200 in der Instrumententafel besteht auch die Möglichkeit, die TTC-Tachometer-Anzeige 200 über ein Head-Up-Display darzustellen, sie also dem Fahrer per Einspiegelung über die Frontscheibe oder eine zusätzliche Scheibe anzuzeigen.

Gemäß einem weiteren Ausführungsbeispiel der vorliegenden Erfindung erfolgt eine Berücksichtigung der Beschleunigung. Dabei kann auch die Beschleunigung bei der Bestimmung der TTC berücksichtigt werden. Dabei kann es sich um die eigene Beschleunigung handeln, die durch Ableitung des Geschwindigkeitssignals bestimmt oder mit einem Beschleunigungssensor gemessen wird oder es kann sich sogar um die relative Beschleunigung handeln, gemessen z. B. mit einem Radar-Sensor.

Während bisher vorwiegend von der Annahme ausgegangen wurde, dass die Bestimmung der TTC auf der Annahme einer konstanten Geschwindigkeit beruht, so führt demgegenüber die Einbeziehung der Beschleunigung im allgemeinen zu einem dynamischeren Verhalten des TTC-Signals.

In Kombination mit der Anzeige über den TTC-Tachometer 200 hat diese höhere Dynamik für den Fahrer den Vorteil, dass er schneller eine Rückmeldung bezüglich seiner Betätigung von Gas- und Bremspedal erhält. Er wird also direkter über die Auswirkungen seines Tuns informiert. Dies kann als sehr vorteilhaft empfunden werden.

Gemäß einem Ausführungsbeispiel wird eine Anwendung für eine Rückwärtsfahrt, einen rückwärtigen und einen seitlichen Verkehr durchgeführt.

Alle Betrachtungen, die hier anhand einer vorwärts gerichteten Kamera beschrieben waren, lassen sich unmittelbar auch auf eine nach hinten gerichtete Kamera anwenden, beispielsweise eine Rückfahrkamera. Mögliche Anwendungen sind die Unterstützung beim Rückwärtsfahren, z. B. Rangieren, Einparken, um somit den Fahrer über die TTC bezüglich möglicher Kollisionen mit Hindernissen oder anderen Fahrzeugen informieren zu können.

Desweiteren kann auch über die TTC bezüglich eines von hinten ankommenden Fahrzeugs informiert werden, insbesondere wenn das Egofahrzeug sich langsamer vorwärts bewegt als das von hinten ankommende Objekt und ein Kollisionsrisiko besteht.

Dies gilt auch für Überholvorgänge, bei denen das Egofahrzeug überholt werden soll. Dessen Fahrer kann mit Hilfe einer TTC-Anzeige 200 besser einschätzen, ob und wie viel Zeit ihm noch für einen Spurwechsel bleibt.

Speziell für die Anzeige von TTC-Werten für den rückwärtigen und seitlichen Verkehr kann es vorteilhaft sein, den TTC-Tachometer 200 oder sogar mehrere davon an anderen Orten unterzubringen. Ein besonders geeigneter Ort für den TTC-Tachometer 200 für den seitlichen Verkehr ist in die Umgebung des jeweiligen seitlichen Rückspiegels.

Entsprechend ist für den TTC-Tachometer 200 für die rückwärtige Sicht die Nähe zum Monitor der Rückfahrkamera besonders günstig.

Anstelle oder zusätzlich zur Anzeige der Time-to-Collision können auch Größen, die der TTC ähnlich sind angezeigt werden, z. B. eine mathematische Verknüpfung aus der TTC und dem Abstand zum Zielobjekt. Im allgemeinsten Falle sind dies alle Größen, die es dem Fahrer ermöglichen, eine Folgefahrt hinter dem Vorderfahrzeug zu regeln und insbesondere durch Bremseingriffe eine Kollision zu vermeiden.

Der erfindungsgemäße Ansatz kann auf einem kamerabasierten Objekt-Tracking-Verfahren aufbauen, das einen Algorithmus bereitstellt, der die Skalierungsänderung von Bild zu Bild und damit die TTC in einer hohen Genauigkeit bestimmen kann, bei gleichzeitig vertretbarem Rechenaufwand. Die Qualität der videobasierten Ergebnisse kann somit für ein den TTC-Tachometer umfassendes Fahrerassistenzprodukt genutzt werden.

Ein TTC-Tachometer ist dabei in idealer Weise geeignet, um mit dem kamerabasierten Objekt-Tracking-Verfahren kombiniert zu werden. Darüber hinaus ist auch eine Anwendung des TTC-Tachometers für andere Sensoren als Video denkbar, z. B. für Radar oder Lidar.

Ein entsprechender TTC-Tachometer stellt ein intuitiv gut verständliches und nützliches Instrument dar, das einen Zugewinn an Sicherheit verschafft und ökonomisches Fahren fördert.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

**Patentansprüche**

1. Verfahren zum Bestimmen einer Steuerinformation zum Anzeigen eines Fahrzustands eines Fahrzeugs mittels einer Anzeigeeinrichtung (200) des Fahrzeugs, wobei das Verfahren die folgenden Schritte umfasst:

   Ermitteln (101) eines sicheren Fahrzustands des Fahrzeugs, bei dem keine Gefahr einer Kollision mit einem vorausfahrenden oder nachfolgenden Fremdfahrzeug besteht;
   Ermitteln (103) eines aktuellen Fahrzustands des Fahrzeugs in Bezug zu dem sicheren Fahrzustand; und
   Bestimmen (105) der Steuerinformation zum Ansteuern der Anzeigeeinrichtung (200) basierend auf dem sicheren Fahrzustand und dem aktuellen Fahrzustand, **dadurch gekennzeichnet, dass** die Steuerinformation ausgebildet ist, um eine Anzeige einer Information über den aktuellen Fahrzustand in Bezug zu einer Information über den sicheren Fahrzustand durch Anzeige einer Zeitdauer bis zu einer Kollision zwischen dem Fahrzeug und dem vorausfahrenden oder nachfolgenden Fremdfahrzeug durch die Anzeigeeinrichtung zu bewirken.

2. Verfahren gemäß Anspruch 1, wobei die Anzeigeeinrichtung (200) eine dem sicheren Fahrzustand zugeordnete Markierung aufweist, und bei dem das Verfahren einen Schritt des Durchführens eines Vergleichs zwischen dem sicheren Fahrzustand und dem aktuellen Fahrzustand umfasst, und bei dem die Steuerinformation ausgebildet ist, um die Information über den aktuellen Fahrzustand abhängig von dem Vergleich in Bezug zu der Markierung darzustellen.

3. Verfahren gemäß Anspruch 2, bei dem die Anzeigeeinrichtung einen ersten Sektor (210) umfasst, der einem ersten Fahrzustand zugeordnet ist, bei dem ein Abstand zwischen dem Fahrzeug und dem Fremdfahrzeug zumindest annähernd konstant bleibt, einen zweiten Sektor (214) umfasst, der einem zweiten Fahrzustand zugeordnet ist, bei dem sich der Abstand zwischen dem Fahrzeug und dem Fremdfahrzeug reduziert, und einen dritten Sektor (212) umfasst, der einem dritten Fahrzustand zugeordnet ist, bei dem sich der Abstand zwischen dem Fahrzeug und dem Fremdfahrzeug vergrößert, und bei dem die Steuerinformation ausgebildet ist, um den aktuellen Fahrzustand abhängig von dem Vergleich in dem ersten, dem zweiten oder dem dritten Sektor darzustellen.

4. Verfahren gemäß Anspruch 3, bei dem die Steuerinformation ausgebildet ist, um ein Größenverhältnis zwischen dem ersten, dem zweiten und dem dritten Sektor (210, 212, 214) abhängig von der Information über die Geschwindigkeit des Fahrzeugs einzustellen.

5. Anzeigeeinrichtung (200) zum Anzeigen eines Fahrzustands eines Fahrzeugs, mit folgenden Merkmalen:

   einem ersten Anzeigebereich (210), der einem ersten Fahrzustand zugeordnet ist, bei dem ein Abstand zwischen dem Fahrzeug und einem vorausfahrenden oder nachfolgenden Fremdfahrzeug zumindest annähernd konstant bleibt;
   einem zweiten Anzeigebereich (214), der einem zweiten Fahrzustand zugeordnet ist, bei dem sich der Abstand zwischen dem Fahrzeug und dem Fremdfahrzeug reduziert;
   einem dritten Anzeigebereich (212), der einem dritten Fahrzustand zugeordnet ist, bei dem sich der Abstand zwischen dem Fahrzeug und dem Fremdfahrzeug vergrößert; und
   einer Schnittstelle zum Empfangen einer Steuerinformation zum Ansteuern der Anzeigeeinrichtung (200), **dadurch gekennzeichnet, dass** die Steuerinformation ausgebildet ist, um eine Anzeige einer Information über einen aktuellen Fahrzustand des Fahrzeugs in Bezug zu einer Information über einen sicheren Fahrzustand des Fahrzeugs durch Anzeige einer Zeitdauer bis zu einer Kollision zwischen dem Fahrzeug und dem vorausfahrenden oder nachfolgenden Fremdfahrzeug durch die Anzeigeeinrichtung zu bewirken.

6. Anzeigeeinrichtung (200) gemäß Anspruch 5, mit einem Anzeigebereich zum Anzeigen eines Abbilds (830) des Fremdfahrzeugs.

7. Verfahren zur Unterstützung eines Fahrers eines Fahrzeugs bei einer Fahraufgabe mittels einer Anzeigeeinrichtung (200), das die folgenden Schritte umfasst:

   Bestimmen einer Steuerinformation gemäß einem der Ansprüche 1 bis 4;
   Bereitstellen (107) der Steuerinformation an eine Anzeigeeinrichtung gemäß einem der Ansprüche 5 bis 6; und
   - Anzeigen einer Information über einen aktuellen Fahrzustand in Bezug zu einer Information über einen sicheren Fahrzustand des Fahrzeugs mittels der Anzeigeeinrichtung (200), ansprechend auf die Steuerinformation.

8. Vorrichtung, die das ausgebildet ist, um die Schritte eines Verfahrens gemäß einem der Ansprüche 1 bis 4 oder 7 durchzuführen.

9. Computer-Programmprodukt mit Programmcode zur Durchführung des Verfahrens nach einem der Ansprüche 1 bis 4 oder 7, wenn das Programm auf einem Informationssystem ausgeführt wird.

## Claims

1. Method for determining an item of control information for displaying a driving state of a vehicle by means of a display device (200) of the vehicle, wherein the method comprises the following steps of:

   determining (101) a safe driving state of the vehicle, in which there is no risk of a collision with a third-party vehicle in front or behind;
   determining (103) a current driving state of the vehicle with respect to the safe driving state; and
   determining (105) the control information for controlling the display device (200) on the basis of the safe driving state and the current driving state, **characterized in that** the control information is designed to cause the display device to display an item of information relating to the current driving state with respect to an item of information relating to the safe driving state by displaying a period until a collision between the vehicle and the third-party vehicle in front or behind.

2. Method according to Claim 1, wherein the display device (200) has a mark assigned to the safe driving state, and in which the method comprises a step of comparing the safe driving state and the current driving state, and in which the control information is designed to present the information relating to the current driving state on the basis of the comparison with respect to the mark.

3. Method according to Claim 2, in which the display device comprises a first sector (210), which is assigned to a first driving state in which a distance between the vehicle and the third-party vehicle remains at least approximately constant, a second sector (214), which is assigned to a second driving state in which the distance between the vehicle and the third-party vehicle is reduced, and a third sector (212), which is assigned to a third driving state in which the distance between the vehicle and the third-party vehicle is increased, and in which the control information is designed to present the current driving state on the basis of the comparison in the first, second or third sector.

4. Method according to Claim 3, in which the control information is designed to set a size ratio between the first, second and third sectors (210, 212, 214) on the basis of the information relating to the speed of the vehicle.

5. Display device (200) for displaying a driving state of a vehicle, having the following features:

   a first display region (210), which is assigned to a first driving state in which a distance between the vehicle and a third-party vehicle in front or behind remains at least approximately constant;
   a second display region (214), which is assigned to a second driving state in which the distance between the vehicle and the third-party vehicle is reduced;
   a third display region (212), which is assigned to a third driving state in which the distance between the vehicle and the third-party vehicle is increased; and
   an interface for receiving an item of control information for controlling the display device (200), **characterized in that** the control information is designed to cause the display device to display an item of information relating to a current driving state of the vehicle with respect to an item of information relating to a safe driving state of the vehicle by displaying a period until a collision between the vehicle and the third-party vehicle in front or behind.

6. Display device (200) according to Claim 5, having a display region for displaying an image (830) of the third-party vehicle.

7. Method for assisting a driver of a vehicle during a driving task by means of a display device (200), which comprises the following steps of:

   determining an item of control information according to one of Claims 1 to 4;
   providing (107) a display device according to one of Claims 5 to 6 with the control information; and
   displaying an item of information relating to a current driving state with respect to an item of information relating to a safe driving state of the vehicle by means of the display device (200) in response to the control information.

8. Apparatus which is designed to carry out the steps of a method according to one of Claims 1 to 4 or 7.

9. Computer program product having program code for carrying out the method according to one of Claims 1 to 4 or 7 when the program is executed on an information system.

**Revendications**

1. Procédé pour déterminer une information de commande afin d'afficher un état de marche d'un véhicule au moyen d'un dispositif d'affichage (200) du véhicule, dans lequel le procédé comprend les étapes consistant à :

déterminer (101) un état de marche sûr du véhicule pour lequel il n'existe aucun danger de collision avec un véhicule étranger précédent ou suivant ;
déterminer (103) un état de marche effectif du véhicule par rapport à l'état de marche sûr ; et
obtenir (105) l'information de commande pour commander le dispositif d'affichage (200) sur la base de l'état de marche sûr et de l'état de marche effectif, **caractérisé en ce que** l'information de commande, établie de manière à induire un affichage d'une information concernant l'état de marche effectif par rapport à une information concernant l'état de marche sûr par affichage d'une durée s'écoulant jusqu'à une collision entre le véhicule et le véhicule étranger précédent ou suivant au moyen du dispositif d'affichage.

2. Procédé selon la revendication 1, dans lequel le dispositif d'affichage (200) comporte un marquage associé à l'état de marche sûr, et dans lequel le procédé comprend une étape consistant à effectuer une comparaison entre l'état de marche sûr et l'état de marche effectif, et dans lequel l'information de commande est établie de manière à représenter l'information concernant l'état de marche effectif en fonction de la comparaison par rapport au marquage.

3. Procédé selon la revendication 2, dans lequel le dispositif d'affichage comprend un premier secteur (210) qui est associé à un premier état de marche pour lequel une distance entre le véhicule et le véhicule étranger reste au moins pratiquement constante, et comprend un deuxième secteur (214) qui est associé à un deuxième état de marche pour lequel la distance entre le véhicule et le véhicule étranger diminue, et comprend un troisième secteur (212) qui est associé à un troisième état de marche pour lequel la distance entre le véhicule et le véhicule étranger augmente, et dans lequel l'information de commande est établie de manière à représenter l'état de marche effectif en fonction de la comparaison dans le premier, le deuxième ou le troisième secteur.

4. Procédé selon la revendication 3, dans lequel l'information de commande est établie de manière à régler un rapport de grandeurs entre les premier, deuxième et troisième secteurs (210, 212, 214) en fonction de l'information concernant la vitesse du véhicule.

5. Dispositif d'affichage (200) destiné à afficher un état de marche d'un véhicule, comprenant :

une première zone d'affichage (210) qui est associée à un premier état de marche pour lequel une distance entre le véhicule et un véhicule étranger précédent ou suivant reste au moins sensiblement constante ;
une deuxième zone d'affichage (214) qui est associée à un deuxième état de marche pour lequel la distance entre le véhicule et le véhicule étranger diminue ;
une troisième zone d'affichage (212) qui est associée à un troisième état de marche pour lequel la distance entre le véhicule et le véhicule étranger augmente ; et
une interface permettant de recevoir une information de commande destinée à commander le dispositif d'affichage (200), **caractérisé en ce que** l'information de commande est conçue pour induire un affichage par l'intermédiaire du dispositif d'affichage d'une information concernant un état de marche effectif du véhicule par rapport à une information concernant un état de marche sûr du véhicule par affichage d'une durée s'écoulant jusqu'à une collision entre le véhicule et le véhicule étranger précédent ou suivant.

6. Dispositif d'affichage (200) selon la revendication 5, comportant une zone d'affichage permettant d'afficher une représentation (830) du véhicule étranger.

7. Procédé d'assistance à un conducteur d'un véhicule lors d'une consigne de guidage au moyen d'un dispositif d'affichage (200), comprenant les étapes consistant à :

déterminer une information de commande selon l'une quelconque des revendications 1 à 4 ;
fournir (107) l'information de commande à un dispositif d'affichage selon l'une quelconque des revendications 5 à 6 ; et
afficher une information concernant un état de marche effectif par rapport à une information concernant un état de marche sûr du véhicule au moyen du dispositif d'affichage (200), d'une manière qui correspond à l'information de commande.

8. Dispositif conçu pour mettre en oeuvre les étapes d'un procédé selon l'une quelconque des revendications 1 à 4 ou 7.

9. Produit de programme d'ordinateur comportant un code de programme destiné à mettre en oeuvre le procédé selon l'une quelconque des revendications 1 à 4 ou 7 lorsque le programme est exécuté sur un système informatique.

Fig. 1

Fig. 2

Fig. 3

Fig. 4

Fig. 5

Fig. 6

Fig. 7

Fig. 8

Fig. 9

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6922139 B2
- US 4095551 A
- DE 102009048285 A1
- EP 2143587 A2
- DE 19800202 A1
- DE 19847611 A1
- DE 102005057636 A1